# EUROPÄISCHE PATENTANMELDUNG

(11) **EP 1 018 615 A2**
(43) Veröffentlichungstag der Anmeldung: **12.07.2000**
(21) Anmeldenummer: 99126046.4
(22) Anmeldetag: 28.12.1999
(51) Int. Cl.: F16K 24/04

(54) **Entlüftungsvorrichtung mit einem Entlüftungsventil, insbesondere für Heizkörper**

(30) Priorität: 08.01.1999 DE 19900472
(71) Anmelder: Anton Hummel Verwaltungs-GmbH, D-79183 Waldkirch (DE)
(72) Erfinder: Seifert, Rainer, D-79189 Bad Krozingen (Tunsel) (DE); Steiner, Rolf, D-79194 Gundelfingen (DE); Gerber, Helmut, D-79183Waldkirch (DE); Adolf, Jürgen, D-79211 Denzlingen (DE)
(74) Vertreter: Schmitt, Hans, Dipl.-Ing.

(57) **Zusammenfassung**

Die Entlüftungsvorrichtung mit Entlüftungsventil (1) weist ein verhältnismäßig stabiles Gehäuse (2) aus Metall oder hartem Kunststoff mit einem Schraubstutzen (3) mit Außengewinde oder Innengewinde auf, womit die Vorrichtung an einem zu entlüftenden Heizkörper, einer Leitung oder dergleichen oder auch an einem mit Flüssigkeit zu befüllenden oder zu entleerenden Heizkörper oder dergleichen angebracht werden kann. In dem Gehäuse (2) befindet sich eine verstellbare Ventilspindel (5), um einen Durchgang aus dem zu entlüftenden oder zu entleerenden Hohlraum öffenbar zu verschließen. Eine bevorzugt drehbare Kammer (7) hat dabei die endgültige Auslaßöffnung (10) für das jeweilige Medium. Das Gehäuse (2), die Ventilspindel (5) und die Kammer (7) sinddabei Teile eines Bausatzes, bei welchem das Gehäuse (2) und bevorzugt auch die Ventilspindel (5) sowohl für ein Entlüftungsventil als auch für eine Vorrichtung zum Entleeren oder Befüllen mit Flüssigkeit in gleichbleibender Form und Abmessung verwendbar sind, wobei zu diesem Bausatz unterschiedliche Kammern gehören, die wahlweise für das Entlüften oder Entleeren an dem Gehäuse (2) anbringbar sind. Dies ergibt für diese oft an ein und demselben Behältnis oder Heizkörper oder dergleichen anbringbaren Entlüftungs- und Entleerventilen einen erheblichen Rationalisierungseffekt.

## Beschreibung

Die Erfindung betrifft eine Entlüftungsvorrichtung mit einem Entlüftungsventil, insbesondere für Heizkörper, Heizanlagen oder Leitungen, mit einem insbesondere einen Schraubstutzen zu seiner Befestigung aufweisenden Gehäuse und einer darin verstellbaren Ventilspindel als Entlüftungsschraube oder Entleerschraube, die eine Durchgangsöffnung in eine Kammer durchsetzt, welche Kammer ihrerseits eine Auslaßöffnung hat und über einen dichten Sitz mit dem Gehäuse verbunden ist.

Derartige Entlüftungsvorrichtungen sind in unterschiedlichen Ausführungsformen bekannt. Aus DE 33 04 505 ist beispielsweise ein Entlüftungsventil bekannt, bei welchem die Kammer, in die die Luft beim Entlüften zunächst gelangt, verdrehbar ist, so daß deren Auslaßöffnung in eine günstige Lage gebracht werden kann, auch wenn der Heizkörper und das Entlüftungsventil bereits montiert sind.

Daneben sind Vorrichtungen zum Entleeren und Füllen von Heizkörpern mit Heizflüssigkeit beispielsweise aus DE 195 06 672 C2 bekannt. Während die Entlüftungsventile an einem Heizkörper, Behälter oder einer Leitung in möglichst großer Höhe angeordnet werden, werden derartige Vorrichtungen zum Entleeren und Wiederauffüllen möglichst tief montiert. Die erwähnte bekannte Vorrichtung zum Entleeren und Füllen weist ebenfalls einen Schraubkörper mit einer dem Inneren des Heizkörpers zugewandten Öffnung auf, die ihrerseits durch eine als Entleerschraube dienende Ventilspindel verschlossen und geöffnet werden kann, wobei die Flüssigkeit beim Entleeren in einer Kammer und zu einer Auslaßöffnung dieser Kammer gelangt.

Da insbesondere Heizkörper, aber auch andere geschlossene und Flüssigkeit enthaltende Systeme sowohl entlüftet als auch einzeln entleert und/oder separat gefüllt werden können sollen und nach ihrer Entleerung und anschließenden Befüllung erst recht auch wieder entlüftet werden müssen, sind die erwähnten Entlüftungsvorrichtungen einerseits und Vorrichtungen zum Entleeren andererseits in zunehmender Zahl nebeneinander notwendig.

Es ist deshalb auch schon aus DE-GM 92 16 796 bekannt, einen Lüftungsbaustopfen sowohl zum Entlüften als auch zum Entwässern vorzusehen. Dabei ist jedoch keine Kammer vorhanden, mit der das austretende Medium in eine gewünschte Richtung gelenkt beziehungsweise an einen Schlauch oder dergleichen angeschlossen werden könnte. Ferner ist der Auslaßquerschnitt auf den Entlüftungsvorgang ausgerichtet, so daß beim Entwässern ein entsprechend großer Zeitaufwand zu erwarten ist.

Aus DE 21 43 767 ist eine Entlüftungsvorrichtung mit einem Entlüftungsventil bekannt, bei der gleichzeitig ein Wassereinlaufventil und das Entlüftungsventil zusammengebaut beziehungsweise kombiniert sind. Für den Entlüftungsfall stellt dies also eine sehr aufwendige Anordnung dar und vor allem ist diese kombinierte Ventilanordnung nicht dazu geeignet, die Flüssigkeit aus einem Heizkörper abzulassen, weil diese Vorrichtung wegen der Entlüftungsfunktion am Heizkörper sehr hoch angeordnet werden muß. Somit ist diese Anordnung nur zum Füllen eines Heizkörpers geeignet. Demgemäß fehlen auch Kammern, in die das Medium beim Entleeren zunächst gelangt, um von dort dann abgelassen werden zu können.

Der Erfindung liegt deshalb die Aufgabe zugrunde, eine Entlüftungsvorrichtung der eingangs genannten Art zu schaffen, mit welcher eine Rationalisierung insbesondere bei der Fertigung solcher Entlüftungsvorrichtungen und Entleervorrichtungen erreicht werden kann.

Zur Lösung dieser Aufgabe ist die eingangs genannte Vorrichtung dadurch gekennzeichnet, daß das Gehäuse, die Ventilspindel und die Kammer Teile eines Bausatzes sind, bei welchem das Gehäuse wahlweise für eine Entlüftung oder für eine Entleerung oder Befüllung mit Flüssigkeit verwendbar und für diese unterschiedlichen Verwendungsfälle übereinstimmend ausgebildet ist, daß zu diesem Bausatz Ventilspindeln mit jeweils übereinstimmenden Gewinde gehören, die in das Gehäuse passen und wahlweise je nach Anwendungsfall einsetzbar sind, und daß wenigstens die eine Kammer des Bausatzes für die Entlüftung einerseits und wenigstens eine andere oder anders bemessene Kammer des Bausatzes für die Entleerung oder Befüllung mit Flüssigkeit andererseits einen übereinstimmenden Sitz oder eine übereinstimmende Kupplung zum Verbinden mit dem Gehäuse haben.

Auf diese Weise kann also ein gleichbleibender Schraubkörper sowohl für das Entlüften als auch für das Entleeren beispielsweise eines Heizkörpers vorgesehen werden, so daß sich bei der Fertigung der Entlüftungsventile einerseits und der Entleerstopfen oder -ventile andererseits ein entsprechender Rationalisierungseffekt ergibt. Der Benutzer kann je nach Anwendungsfall entweder die für das Entlüften geeignete Ventilspindel oder die für das Entleeren dienende Ventilspindel in dem entsprechenden Gehäuse erhalten, wobei dann auch die Kammer an dem jeweiligen Fall angepaßt werden kann. Dabei kann eventuell der Benutzer, beispielsweise der Heizungsmonteur, eine entsprechend große Anzahl von Gehäuse und dazu dann die Entlüftungs- und Entleerspindeln und die jeweiligen Abschlußkammern beziehen und als Bausatz auf Vorrat halten und von Anwendungsfall zu Anwendungsfall in zutreffender Weise kombinieren.

Dabei ist es günstig, wenn die jeweilige Kammer lösbar an dem oder den Gehäusen befestigt ist und je nach Anwendungsfall die Kammern und/oder die Ventilspindeln auswechselbar sind. Somit kann unter Umständen auch bei einer falschen Zusammensetzung der Bausatzteile diese nachträglich korrigiert werden. Ist beispielsweise versehentlich an dem Gehäuse eine Entlüftungsspindel mit entsprechender Kammer angebracht worden, soll die Vorrichtung aber als Entleer-Ventil montiert werden, können Ventilspindel und Kammer problemlos ausgewechselt werden.

Besonders zweckmäßig ist es, wenn die Ventilspindel zur Umwandlung in eine Entleerschraube mit einer zu dem Bausatz gehörenden Verlängerung zur Vergrößerung ihres axialen Maßes lösbar kuppelbar ist und diese Verlängerung die vergrößerte Abmessung der zum Entleeren oder Befüllen dienenden Kammer bis zu einer Bedienungsöffnung an dieser Kammer überbrückt. Die Ventilspindel kann also wahlweise für das Entlüften einteilig und für das Entleeren zweiteilig ausgebildet sein, wobei ihr erster Teil mit dem entsprechenden Dichtsitz bereits als Entlüftungsschraube mit einer entsprechend bemessenen und an dem Gehäuse anbringbaren Kammer benutzt werden kann, während die zweiteilige Ausbildung, das heißt die Ergänzung der Ventilspindel um die Verlängerung dann zu dem entsprechend größeren axialen Maß führt, welches für eine Entleer- und Befüll-Anordnung zweckmäßig ist, damit nämlich mit einer größeren Kammer auch ein größerer Abfluß beziehungsweise Schlauchanschluß vorgesehen werden kann, um entsprechende Durchflußquerschnitte für die Flüssigkeit beim Entleeren oder beim Befüllen zu erhalten. Dadurch kann der Rationalisierungseffekt noch weiter vergrößert werden, weil die Ventilspindel dann dennoch für beide Anwendungsfälle und somit in großer Stückzahl gefertigt und vorgesehen werden kann. Beispielsweise kann die Kupplung für das Verlängerungsstück dem Angriff für ein Bedienungswerkzeug der Ventilspindel oder Entlüftungsschraube entsprechen. Somit kann die Verlängerung einfach axial beispielsweise an einem Sechskant oder Innensechskant mit einem entsprechenden Gegenstück aufgesteckt und von der anschließend montierten Kammer festgelegt werden. Eine solche Verlängerung ist preiswerter herstellbar als eine größer bemessene Ventilspindel.

Der Benutzer kann also bei einer derartigen Ausgestaltung für alle Verwendungsfälle den Schraubkörper und die Ventilspindel in gleicher Bauform und Baugröße verwenden, die er im Falle der Entlüftung benötigt, und muß von Fall zu Fall nur noch eventuell eine Verlängerung für die Ventilspindel vorsehen und für jeden Anwendungsfall die entsprechende Kammer mit Auslaßöffnung oder Ablaßstutzen wählen.

Dabei kann die Kammer für den Entlüftungsfall kürzer als die Kammer für den Entleerungsfall sein und die Austrittsöffnung für den Entlüftungsfall kann einen kleineren Querschnitt als die für den Entleerungs- oder Füllvorgang haben. Somit kann das Entlüften in üblicher und bekannter Weise feinfühlig durchgeführt werden, das Entleeren oder Befüllen mit Flüssigkeit aber über vergrößerte Querschnitte relativ schnell durchgeführt werden.

Die Auslaßöffnung der größeren Kammer kann - wie bereits erwähnt - einen Schlauchanschluß haben oder bilden, was sowohl das Entleeren als auch das Befüllen vereinfacht.

Die wahlweise an den Gehäusen dichtend anbringbaren Kammern des Bausatzes können in axialer Richtung insbesondere durch eine Schnappverbindung festlegbar und relativ zu dem Gehäuse verdrehbar sein, wie es beispielsweise aus DE 21 11 453 oder DE 33 04 505 an sich bekannt ist. Bei dem erfindungsgemäßen Bausatz können also die Vorteile dieser vorbekannten Entlüftungsventile nutzbar gemacht werden, weil die Kammern lösbar mit dem Gehäuse verbindbar und auswechselbar sind. Dabei kann derselbe Vorgang auch für eine zum Entleeren zusammengesetzte Vorrichtung nutzbar gemacht werden.

Das Gehäuse und/oder die Kammern und/oder die Ventilspindel(n) können dabei aus Kunststoff bestehen. Dies ergibt eine besonders preiswerte Anordnung.

Während bei dem Entlüftungsventil gemäß DE 33 04 505 C2 die drehbare Kammer einen die Ventilspindel enthaltenden Stutzen außenseitig übergreift, kann bei einer Weiterbildung der vorliegenden Erfindung der Sitz der Kammer im Inneren des Gehäuses vorgesehen sein beziehungsweise kann ein rastender oder einschnappender Vorsprung der Kammer in einen hülsenartigen Bereich des Gehäuses passen und lösbar einschnappen. Dadurch wird die Schnappverbindung in das Innere in der Regel härteren und widerstandfähigeren Gehäuses verlegt und gut geschützt, ohne daß an dieser Verbindungsstelle eine zusätzliche äußere Abschirmung oder dergleichen erforderlich ist.
Darüber hinaus wird dadurch - auch für "normale" Entlüftungsventile oder Entleerventile - eine weitere Ausgestaltung der Erfindung von eigener schutzwürdiger Bedeutung ermöglicht, die darin bestehen kann, daß die Kammer im Bereich ihres Sitzes im Gehäuse durch die in ihrem Inneren befindliche und in axialer Richtung beim Öffnen verstellbare Ventilspindel mittels einer Konuswirkung an ihrem Sitz anpreßbar und dadurch zusätzlich abdichtbar und/oder gegen ungewolltes axiales Lösen festlegbar ist und daß die Kammer bei Schließstellung der Ventilspindel gegenüber dem Gehäuse lösbar oder ausrastbar gehalten ist. Da die Kammer mit ihrem Sitz an einem Bereich des Gehäuses innenseitig angeordnet ist, kommt sie in diesem Bereich in unmittelbare Nachbarschaft zu der axial verstellbaren Ventilspindel, so daß dort eine entsprechende gegenseitige Verklemmung und Verpressung beim Öffnen der Ventilspindel angeordnet und vorgesehen werden kann. Gerade bei geöffneter Ventilspindel wäre ein ungewolltes Lösen der an sich lösbaren Verbindung zwischen Gehäuse und Kammer besonders ungünstig, weil dann das aus dem Ventil austretendeMediumunkontrolliertherausschießenwürde.Gleichzeitig ist aber wünschenswert, daß die Kammer ausgetauscht werden kann, was bei geschlossenem Ventil mit eingeschaubter Ventilspindel problemlos möglich ist.

Der Rastvorsprung der Kammer kann wenigstens einen ringförmigen Wulst oder dergleichen und der hülsenartige Aufnahmebereich des Gehäuses eine dazu passende Hinterschneidung haben und die Kammer kann mit dem Gehäuse oder elastischer Verformung formschlüssig aber lösbar verbunden sein. Wenn der Wulst und die Hinterschneidung entsprechend schräge und gerundete zueinander passende Flächen haben, können die Teile druckknopfartig ineinander gedrückt werden und auch wieder ausrasten, was dann nicht möglich ist, wenn der übergriffene Wulst etwa gemäß DE 33 04 505 C2 auf seiner hintergriffenen Seite eine etwa rechtwinklig zur Mittelachse verlaufende Rastfläche hat. Ist diese aber schräg ansteigend, ist auch ein Ausrasten wieder möglich. Bei geöffneter Ventilspindel wird dies aber durch die schon beschriebene Maßnahme gesperrt und verhindert.

Eine konstruktiv besonders einfache Lösung ergibt sich dabei, wenn an der Außenseite der Ventilspindel ein sich von der Gehäuseöffnung weg insbesondere konisch oder stetig vergrößernder oder erweiternder Abschnitt vorgesehen ist, dessen Querschnitt also in Einschraubrichtung der Ventilspindel ansteigt und der bei in Schließstellung befindlicher Ventilspindel der Innenseite des Sitzes der Kammer und insbesondere dem Wulstbereich oder Einschnappbereich benachbart ist und beim Öffnen der Ventilspindel in die Kammer und in den Bereich des formschlüssigen Sitzes eintritt und mit seinen Schrägflächen in Wirkverbindung mit der Kammer und ihrem Sitz im Sinne einer Aufweitung oder Sperrung einer Zusammendrückung gelangt. Bei geöffneter Ventilspindel sorgt also der an der Außenseite der Ventilspindel befindliche Konus dafür, daß der Sitzbereich der Kammer nicht radial einwärts nachgeben könnte, wenn an der Kammer im Sinne eines Lösens in axialer Richtung gezogen würde. Somit ist bei geöffneter Ventilspindel die Lösbarkeit der Kammer aufgehoben oder unterbunden.

Eine Alternative oder zusätzliche Maßnahme könnte darin bestehen, daß der Eintrittsbereich für die Ventilspindel in die Kammer und deren Sitz an dem Gehäuse konisch oder trichterförmig gestaltet ist und ein Bund oder dergleichen Umfangsteil oder ein sich in Öffnungsrichtung verjüngender Konus an der Ventilspindel in diese Öffnung unter radialer Kraftbeaufschlagung und/oder Aufweitung der Kammer beim Öffnen der Ventilspindel eintritt. Die Konuswirkung könnte also auch an den Eintritt in die Kammer verlegt sein beziehungsweise sowohl der Eintritt in die Kammer als auch ein an der Ventilspindel außenseitig überstehender Teil könnten gemeinsam eine entsprechend verstärkte Konuswirkung ausüben.

In all diesen Fällen wird erreicht, daß gleichzeitig der Öffnungsweg der Ventilspindel begrenzt und die Kammer gegen ungewolltes Lösen festgelegt werden. Es ergibt sich also eine Doppelfunktion dieser an der Ventilspindel und/oder der Kammer vorgesehenen gegenseitigen Sperre oder Verriegelung, was im Hinblick auf die lösbare Befestigung der Kammer von großem Vorteil ist, beziehungsweise eine lösbare Befestigung der Kammer erlaubt, so daß diese bei Fehlmontagen und falschen Zusammensetzungen aus dem Bausatz nachträglich korrigiert werden kann.

Vor allem bei Kombination einzelner oder mehrerer der vorbeschriebenen Merkmale und Maßnahmen ergibt sich also ein Baukastensystem oder Bausatz, bei welchem möglichst viele Teile übereinstimmen, die sowohl für das Entlüften als auch für ein Entleeren oder Befüllen mit Flüssigkeit geeignet sind. Man kann auch von einem Ventil zum Entlüften, Befüllen und/oder Entleeren sprechen. Vor allem kann das Gehäuse und die Ventilspindel eine Grundeinheit bilden, die wahlweise mit unterschiedlichen Kammern und eventuell einem Zusatzteil für die Ventilspindel kombiniert werden können. Dabei können die Teile aus Kunststoff und/oder aus Metall bestehen.

Nachstehend ist ein Ausführungsbeispiel der Erfindung anhand der Zeichnung näher beschrieben. Es zeigt in zum Teil schematisierter Darstellung:
- Fig.1: einen Längsschnitt durch ein erfindungsgemäßes Entlüftungsventil und
- Fig.2: einen Längsschnitt durch eine Vorrichtung, bei welcher ein Schraubstutzen und eine Ventilspindel des Entlüftungsventiles gemäß Figur 1 in gleicher Form und Abmessung zusammenwirkend vorgesehen sind, wobei aber eine andere größere Kammer und an der Ventilspindel ein Verlängerungsteil vorgesehen sind, so daß die Vorrichtung in dieser Anordnung als Entleer- oder Füll-Ventil für Flüssigkeit verwendet werden kann.

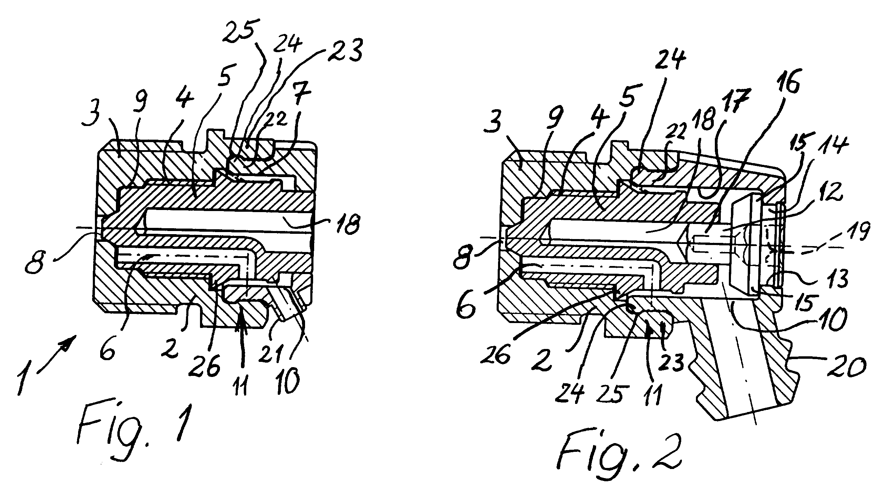

Die Figuren 1 und 2 zeigen gemeinsam eine Entlüftungsvorrichtung mit einem in Figur 1 dargestellten Entlüftungsventil 1, welches bevorzugt für Heizkörper, Heizleitungen oder Heizanlagen benutzt werden kann.

Dieses Entlüftungsventil 1 weist ein Gehäuse 2 mit einem Schraubstutzen 3 für seine Befestigung in einer entsprechenden Öffnung des Heizkörpers oder dergleichen und eine in diesem Gehäuse 2 in axialer Richtung mittels Gewinde 4 axial verstellbare Ventilspindel 5 als Entlüftungsschraube oder in der Anwendung gemäß Figur 2 als Entleerschraube auf, die eine Durchgangsöffnung 6 in eine Kammer 7 aufweist und/oder eine solche Durchgangsöffnung 8 durchsetzt beziehungsweise in Verschlußstellung abschließt.

Es wäre denkbar, daß durch das Öffnen der Ventilspindel 5 die Öffnung 8 und ein diese fortsetzender Durchgang zu dem Inneren der Kammer 7 freigegeben wird. Im Ausführungsbeispiel ist jedoch in Verlängerung des Gewindes 4 noch ein Zentrier- und Führungsabschnitt 9 vorgesehen und deshalb eine Durchgangsöffnung 6 durch die Ventilspindel 5 zu der Kammer 7 geführt. Gegebenenfalls könnten auch mehrere derartige Durchgangsöffnungen 6 am Umfang der Ventilspindel 5 angeordnet sein.

Die erwähnte Kammer 7 hat ihrerseits eine Auslaßöffnung 10 und ist über einen im ganzen mit 11 bezeichneten dichten Sitz mit dem Gehäuse 2 verbunden.

Bei gleichzeitiger Betrachtung der Figuren 1 und 2 wird deutlich, daß das Gehäuse 2, die Ventilspindel 5 und die Kammer 7 Teile eines Bausatzes sind, bei welchem das Gehäuse 2 wahlweise für eine Entlüftung gemäß Figur 1 oder für eine Entleerung oder Befüllung mit Flüssigkeit gemäß Figur 2 verwendbar und für diese unterschiedlichen Verwendungsfälle übereinstimmend ausgebildet ist. Es ist deshalb auch in den Figuren selbst und hinsichtlich seiner weiteren Einzelheiten mit denselben Bezugszahlen versehen, was in gleicher Weise auch für die in diesem Sinne noch zu beschreibende Ventilspindel 5 gilt.

Zu diesem Bausatz gehört nämlich jeweils auch die Ventilspindel 5, im Ausführungsbeispiel mit ihrer Durchgangsöffnung 6, und mit übereinstimmendem Gewinde 4 sowie der Führung und Zentrierung 9.

Dabei erkennt man in Figur 2, daß je nach Anwendungsfall unterschiedliche Kammern 7 und 17 vorgesehen sind. Die eine Kammer 7 des Bausatzes wird im Falle der Entlüftung und eine andere oder anders bemessene Kammer 17 im Falle der Verwendung für ein Entleeren oder Befüllen mit Flüssigkeit vorgesehen. Dabei haben diese Kammern 7 und 17 aber jeweils einen übereinstimmenden Sitz 11 oder eine übereinstimmende Kupplung zum Verbinden mit dem Gehäuse 2.

Die jeweilige Kammer 7 oder 17 ist dabei lösbar an den Gehäusen 2 befestigt und kann je nach Anwendungsfall ausgewechselt werden. Insbesondere bei Fehlmontagen können diese also problemlos wieder korrigiert werden.

Wie erwähnt, ist für beide Anwendungsfälle im Ausführungsbeispiel dieselbe Ventilspindel 5 vorgesehen. Zu ihrer Umwandlung in eine Entleerschraube kann sie gemäß Figur 2 mit einer zu dem Bausatz gehörenden Verlängerung 12 zur Vergrößerung ihres axialen Maßes lösbar kuppelbar sein, wobei diese Verlängerung 12 die vergrößerte Abmessung der zum Entleeren oder Befüllen dienenden Kammer 17 bis zu einer Bedienungsöffnung 13 an dieser Kammer 17 überbrückt, wo die Verlängerung 12 mit einem Drehlager 14 und einem axialen Anschlag 15 drehbar aber dicht befestigt werden oder sein kann.

Zur Kupplung greift die Verlängerung 12 mit einem Sechskant 16 in einen Innensechskant 18 der Ventilspindel 5 ein, der im Anwendungsfall gemäß Figur 1 als Entlüftungsventil für das Eingreifen eines mit einem Sechskant versehenen Bedienungswerkzeuges dient. Somit kann diese für die Bedienung der Ventilspindel 5 dienende Verformung oder Formgebung gleichzeitig in rationeller Weise zum Kuppeln mit der Verlängerung 12 ausgenutzt werden, die ihrerseits einen analogen Innensechskant 19 für dasselbe Bedienungswerkzeug enthalten kann.

Beim Vergleich der Figuren 1 und 2 wird deutlich, daß die Kammer 7 für den Entlüftungsfall kleiner als die Kammer 17 für den Entleerungsfall ist und daß die Austrittsöffnung 10 für den Entlüftungsfall einen kleineren Querschnitt als die für den Entleerungs- oder Füllvorgang hat. Somit kann einerseits feinfühlig entlüftet, andererseits aber auch relativ schnell und mit größerem Querschnitt eine Flüssigkeit abgelassen oder wieder eingefüllt werden. Dabei hat die Auslaßöffnung 10 der größeren Kammer 17 einen Schlauchanschluß 20, um einen entsprechenden Füllschlauch mit genügend großem Querschnitt anschließen zu können.

Aufgrund dieser Abmessungsverhältnisse der Kammern 7 und 17 ist die Verlängerung 12 der Ventilspindel 5 notwendig, damit dennoch diese Ventilspindel 5 unverändert für beide Anwendungsfälle benutzt werden kann. Denkbar wäre allerdings auch, für beide Fälle unterschiedlich lange Ventilspindeln vorzusehen, bei denen dann lediglich Gewinde 4 und Führung oder Zentrierung 9 übereinstimmen, aber die axiale Länge unterschiedlich ist. Dies würde aber dennoch die Fertigung unterschiedlicher Spindeln erfordern. Zwar ergäbe sich immer noch ein beachtlicher Rationalisierungseffekt bei der Fertigung der Entlüftungs- und der Füllvorrichtungen, jedoch kann dieser bei übereinstimmender Ventilspindel 5 noch etwas größer sein, wobei lediglich noch ein relativ einfaches Verlängerungsstück 12 zusätzlich benötigt wird.

Die wahlweise an den Gehäusen 2 gemäß Figur 1 und 2 dichtend anbringbaren Kammern 7 und 17 des Bausatzes sind im Ausführungsbeispiel in axialer Richtung durch eine Schnappverbindung im Bereich des Sitzes 11 festlegbar und relativ zu dem Gehäuse 2 verdrehbar. Dadurch können die Auslaßöffnungen 10 und ein dort eventuell vorgesehener Stutzen 21 oder der Schlauchanschluß 20 jeweils in günstige Position gebracht werden, selbst wenn das Gehäuse 2 bereits fest montiert ist.

Besonders preiswert wird die Vorrichtung beziehungsweise der Bausatz, wenn das Gehäuse 2 und/oder die Kammern 7 und/oder 17 und/oder die Ventilspindel, gegebenenfalls auch die Verlängerung 12, aus Kunststoff bestehen. Es ist aber auch möglich, einzelne Teile aus Metall zu fertigen, um denselben Rationalisierungseffekt zu erzielen. Die Kammern 7 und 17 bestehen jedoch zweckmäßigerweise in all diesen Fällen aus Kunststoff.

Der Sitz 11 der Kammer 7 und 17 ist im Ausführungsbeispiel im Inneren des Gehäuses 2 vorgesehen beziehungsweise ein rastender oder einschnappender Vorsprung 22 der Kammer 7 und 17 paßt in einen hülsenartigen Bereich 23 des Gehäuses 2 und kann dort lösbar einschnappen. Somit befindet sich dieser Rastvorsprung 22 der Kammer 7 oder 17 in Gebrauchsstellung innerhalb des Gehäuses 2 beziehungsweise innerhalb von dessen hülsenartigem Bereich 23, so daß der Sitz 11 durch das in der Regel widerstandsfähigere Gehäuse 2 gut geschützt wird.

Dabei hat der Rastvorsprung 22 der Kammer 7 oder 17 wenigstens einen ringförmigen, radial überstehenden Wulst 24, während der hülsenartige Aufnahmebereich 23 des Gehäuses 2 eine dazu passende, ringnutartige Hinterschneidung 25 hat. Die Kammer 7 oder 17 kann somit mit dem Gehäuse 2 unter geringer elastischer Verformung formschlüssig aber lösbar verbunden und verrastet und aufgrund der Formgebung von Wulst 24 und Hinterschneidung 25 auch wieder entrastet werden. Somit kann ein Benutzer, sollte er den Bausatz irrtümlich statt als Entleervorrichtung als Entlüftungsventil zusammengesetzt haben oder umgekehrt, diesen Fehler problemlos wieder korrigieren.

Damit aber die Kammer 7 oder 17 bei Gebrauch und insbesondere beim Öffnen der Ventilspindel 5 nicht ungewollt ausgerastet oder gelöst werden kann, ist sie im Bereich ihres Sitzes 11 im Gehäuse 2 durch die in ihrem Inneren befindliche und in axialer Richtung beim Öffnen verstellbare Ventilspindel 5 mittels einer Konuswirkung an ihrem Sitz anpreßbar und dadurch auch zusätzlich abdichtbar und vor allem auch gegen axiales Lösen festlegbar. Bei Schließstellung der Ventilstellung 5 hingegen ist die Kammer 7 oder 17 in der schon erwähnten Weise von dem Gehäuse 2 lösbar beziehungsweise ausrastbar.

Im einzelnen geschieht diese Sicherung der Kammer 7 oder 17 in ihrer Gebrauchsstellung durch das Öffnen der Ventilspindel 5 dadurch, daß an der Außenseite der Ventilspindel 5 ein sich von der Kammer 7 oder 17 weg und in Richtung des Gewindes 4 stetig oder konisch vergrößernder oder erweiternder Abschnitt 26 vorgesehen ist, der praktisch als Außenkonus einstückig mit der Ventilspindel 5 verbunden sein kann. Dieser Abschnitt oder Konus 26 ist bei in Schließstellung gemäß Figur 1 oder 2 befindlicher Ventilspindel 5 der Innenseite des Sitzes 11 der Kammer 7 oder 17 und insbesondere dem Bereich des Wulstes 24 benachbart, jedoch nicht damit in Berührung. Wird die Ventilspindel 5 aus dieser in Figur 1 und 2 dargestellten Lage axial in Öffnungsrichtung verstellt, tritt dieser sich erweiternde Abschnitt 26 oder Konus in die Kammer 7 oder 17 und vor allem in den Bereich des formschlüssigen Sitzes 11 und dabei auch des Wulstes 24 ein und gelangt mit den Schrägflächen in Wirkverbindung mit der Kammer 7 oder 17 im Sinne einer Aufweitung dieses stirnseitigen Berührbereiches. Dadurch wird einerseits die Öffnungsbewegung der Ventilspindel 5 begrenzt, da auf dem Weg dieses radial überstehenden Abschnittes 25 der Eintritt in die Kammer 7 liegt, gleichzeitig aber auch die Kammer 7 in dem Bereich ihres Wulstes 24 einer radialen Kraft ausgesetzt, durch die eine etwas elastische Kammer 7 oder 17 demgemäß aufgeweitet beziehungsweise im Sinne einer Aufweitung belastet wird. Dadurch wird der Wulst 24 fester in die Hinterschneidung 25 gedrückt, so daß nun ein Ausrasten der Kammer 7 oder 17 verhindert ist. Durch eine relativ einfache Anordnung eines konusartigen Abschnittes 26 an der Ventilspindel 5 kann also die an sich bewußt lösbar vorgesehene Kammer 7 oder 17 während der kritischen Situation der Öffnung der Ventilspindel 5 unlösbar gehalten werden.

Die Entlüftungsvorrichtung mit Entlüftungsventil 1 weist ein verhältnismäßig stabiles Gehäuse 2 aus Metall oder hartem Kunststoff mit einem Schraubstutzen 3 mit Außengewinde oder Innengewinde auf, womit die Vorrichtung an einem zu entlüftenden Heizkörper, einer Leitung oder dergleichen oder auch an einem mit Flüssigkeit zu befüllenden oder zu entleerenden Heizkörper oder dergleichen angebracht werden kann. In dem Gehäuse 2 befindet sich eine verstellbare Ventilspindel 5, um einen Durchgang aus dem zu entlüftenden oder zu entleerenden Hohlraum öffenbar zu verschließen. Eine bevorzugt drehbare Kammer 7 hat dabei die endgültige Auslaßöffnung 10 für das jeweilige Medium. Das Gehäuse 2, die Ventilspindel 5 und die Kammer 7 sind dabei Teile eines Bausatzes, bei welchem das Gehäuse 2 und bevorzugt auch die Ventilspindel 5 sowohl für ein Entlüftungsventil als auch für eine Vorrichtung zum Entleeren oder Befüllen mit Flüssigkeit in gleichbleibender Form und Abmessung verwendbar sind, wobei zu diesem Bausatz unterschiedliche Kammern gehören, die wahlweise für das Entlüften oder Entleeren an dem Gehäuse 2 anbringbar sind. Dies ergibt für diese oft an ein und demselben Behältnis oder Heizkörper oder dergleichen anbringbaren Entlüftungs- und Entleerventilen einen erheblichen Rationalisierungseffekt.

## Patentansprüche

1. Entlüftungsvorrichtung mit einem Entlüftungsventil (1), insbesondere für Heizkörper oder Heizanlagen, mit einem insbesondere einen Schraubstutzen (3) zu seiner Befestigung aufweisenden Gehäuse (2) und einer darin verstellbaren Ventilspindel (5) als Entlüftungsschraube oder Entleerschraube, die eine Durchgangsöffnung (6) in eine Kammer (7) aufweist, welche Kammer (7) ihrerseits eine Auslaßöffnung hat und über einen dichten Sitz (11) mit dem Gehäuse (2) verbunden ist, **dadurch gekennzeichnet,** daß das Gehäuse (2), die Ventilspindel (5) und die Kammer (7) Teile eines Bausatzes sind, bei welchem das Gehäuse (2) wahlweise für eine Entlüftung oder für eine Entleerung oder Befüllung mit Flüssigkeit verwendbar und für diese unterschiedlichen Verwendungsfälle übereinstimmend ausgebildet ist, daß zu diesem Bausatz Ventilspindeln (5) mit jeweils übereinstimmendem Gewinde (4) gehören, die in das Gehäuse passen und wahlweise je nach Anwendungsfall einsetzbar sind, und daß wenigstens die eine Kammer (7) des Bausatzes für die Entlüftung einerseits und wenigstens eine andere oder anders bemessene Kammer (17) des Bausatzes für die Entleerung oder Befüllung mit Flüssigkeit andererseits einen übereinstimmenden Sitz (11) oder eine übereinstimmende Kupplung zum Verbinden mit dem Gehäuse haben.

2. Vorrichtung nach Anspruch 1, dadurch gekennzeichnet, daß die jeweilige Kammer (7, 17) lösbar an dem oder den Gehäusen (2) befestigt ist und je nach Anwendungsfall die Kammern und/oder die Ventilspindeln auswechselbar sind.

3. Vorrichtung nach Anspruch 1 oder 2, dadurch gekennzeichnet, daß die Ventilspindel (5) zur Umwandlung in eine Entleerschraube mit einer zu dem Bausatz gehörenden Verlängerung (12) zur Vergrößerung ihres axialen Maßes lösbar kuppelbar ist und diese Verlängerung (12) die vergrößerte Abmessung der zum Entleeren oder Befüllen dienenden Kammer (17) bis zu einer Bedienungsöffnung (13) an dieser Kammer (17) überbrückt.

4. Vorrichtung nach einem der Ansprüche 1 bis 3, dadurch gekennzeichnet, daß die Kammer (7) für den Entlüftungsfall kürzer als die Kammer (17) für den Entleerungsfall ist und daß die Austrittsöffnung (10) für den Entluftungsfall einen kleineren Querschnitt als die für den Entleerungs- oder Füllvorgang hat.

5. Vorrichtung nach einem der Ansprüche 1 bis 4, dadurch gekennzeichnet, daß die Auslaßöffnung (10) der größeren Kammer (17) einen Schlauchanschluß (20) hat oder bildet.

6. Vorrichtung nach einem der Ansprüche 1 bis 5, dadurch gekennzeichnet, daß die wahlweise an den Gehäusen (2) dichtend anbringbaren Kammern (7, 17) des Bausatzes in axialer Richtung insbesondere durch eine Schnappverbindung festlegbar und relativ zu dem Gehäuse (2) verdrehbar sind.

7. Vorrichtung nach einem der Ansprüche 1 bis 6, dadurch gekennzeichnet, daß das Gehäuse (2) und/oder die Kammern (7, 17) und/oder die Ventilspindel(n) aus Kunststoff bestehen.

8. Vorrichtung nach einem der Ansprüche 1 bis 7, dadurch gekennzeichnet, daß der Sitz (11) der Kammer (7, 17) im Inneren des Gehäuses (2) vorgesehen ist beziehungsweise ein rastender oder einschnappender Vorsprung (22) der Kammer (7, 17) in einen hülsenartigen Bereich (23) des Gehäuses (2) paßt und lösbar einschnappt.

9. Vorrichtung nach dem Oberbegriff des Anspruches 1 und/oder insbesondere nach einem der Ansprüche 1 bis 8, dadurch gekennzeichnet, daß die Kammer (7, 17) im Bereich ihres Sitzes (11) im Gehäuse (2) durch die in ihrem Inneren befindliche und in axiale Richtung beim Öffnen verstellbare Ventilspindel (5) mittels einer Konuswirkung an ihrem Sitz anpreßbar und dadurch zusätzlich abdichtbar und/oder gegen axiales Lösen festlegbar ist und daß die Kammer (7, 17) bei Schließstellung der Ventilspindel (5) gegenüber dem Gehäuse (2) lösbar oder ausrastbar gehalten ist.

10. Vorrichtung nach einem der Ansprüche 1 bis 9, dadurch gekennzeichnet, daß der Rastvorsprung (22) der Kammer (7, 17) wenigstens einen ringförmigen Wulst (24) oder dergleichen und der hülsenartige Aufnahmebereich (23) des Gehäuses (2) eine dazu passende Hinterschneidung (25) hat und die Kammer (7, 17) mit dem Gehäuse (2) unter elastischer Verformung formschlüssig aber lösbar verbunden ist.

11. Vorrichtung nach einem der Ansprüche 1 bis 10, dadurch gekennzeichnet, daß an der Außenseite der Ventilspindel (5) ein sich von der Kammer (7, 17) weg insbesondere konisch oder stetig vergrößernder oder erweiternder Abschnitt (26) vorgesehen ist, der bei in Schließstellung befindlicher Ventilspindel (5) der Innenseite des Sitzes (11) der Kammer (7, 17) und insbesondere dem Bereich des Wulstes (24) benachbart ist und beim Öffnen der Ventilspindel (5) in die Kammer (7, 17) und in den Bereich des formschlüssigen Sitzes (11) eintritt und mit seinen Schrägflächen in Wirkverbindung mit der Kammer (7, 17) im Sinne einer Aufweitung gelangt.

12. Vorrichtung nach einem der Ansprüche 1 bis 11, dadurch gekennzeichnet, daß der Eintrittsbereich für die Ventilspindel in die Kammer und deren Sitz an dem Gehäuse konisch oder trichterförmig gestaltet ist und ein Bund oder dergleichen Umfangsteil oder ein sich in Öffnungsrichtung verjüngender Konus an der Ventilspindel in diese Öffnung unter radialer Kraftbeaufschlagung und/oder Aufweitung der Kammer beim Öffnen der Ventilspindel eintritt.
